# EUROPEAN PATENT APPLICATION

(11) **EP 3 417 924 A1**
(43) Date of publication of application: **26.12.2018**
(21) Application number: 17752711.6
(22) Date of filing: 10.04.2017
(51) Int. Cl.: B01D 17/022, B01D 71/06

(54) **POLYMER MATERIAL, FILM, COATING, PREPARATION METHOD THEREFOR, AND APPLICATION**

(30) Priority: 19.02.2016 CN 201610091769
(71) Applicant: Suzhou Institute of Nano-tech and Nano-bionics (SINANO) Chinese Academy of Sciences, Suzhou, Jiangsu 215123 (CN)
(72) Inventor: JIN, Jian, Suzhou Jiangsu 215123 (CN); GAO, Shoujian, Suzhou Jiangsu 215123 (CN); ZHANG, Feng, Jiangsu 215123 (CN)
(74) Representative: Proi World Intellectual Property GmbH
(86) International application number: PCT/CN2017/079914
(87) International publication number: WO 2017/140279

(57) **Abstract**

The present application discloses a polymer material, membrane and coating as well as preparation methods and applications thereof. The polymer material is formed by the phase inversion of a polymer compound containing an ionizable hydrophilic group and the ionization of the hydrophilic group. The polymer material has a static contact angle of greater than 140° and an adhesive force of less than 10 µN with respect to multiple oil phase systems in water. The polymer material provided by the present application has an underwater super-hydrophobic property and an anti-adhesion function not only to diesel, oil, edible oil and other low-viscosity light oil and numerous water-immiscible organic solvents, but also to petroleum, heavy oil, silicone oil, heavy diesel and other high-viscosity oil. A membrane, coating and the like formed from the polymer material is resistant to oil adhesion and contamination in water along with a self-cleaning effect, and thus has a broad application prospect in a variety of fields.

## Description

### BACKGROUND OF THE INVENTION

### Technical Field

The present application particularly relates to a polymer material, a membrane or coating based on the polymer material as well as preparation methods and applications thereof.

### Description of Related Art

Petroleum leaking or spilling accidents frequently occur in the ocean during petroleum exploitation and transportation, and every year, a large amount of petroleum has leaked to the nature environment of water, which not only causes wastes of resources but also leads to serious environmental pollution, poisoning of large numbers of animals and plants, and damages to the health of human beings. If the petroleum spill is disposed of improperly, such as by on-site combustion or by dispersing chemical treatment agents and the like, it may further cause secondary pollution. A correct way compliant with the sustainable development perspective is to separate and recover the spilled petroleum. At present, booms, oil sorbents, oil mops, and the like are mainly used to separate and collect the oil from the oil-water mixture. It has always been a difficult problem and even a challenge to continuously and effectively separate and recover the spilled petroleum, since the petroleum is liable to adhere to and contaminate the recovery equipment and then cause damages to its functions. In addition, mixtures of other high-viscosity oil (such as heavy oil, silicone oil, and heavy diesel) with water produced during industrial production are equally detrimental due to their large emission, complex composition, high COD value, high adhesion, and pollution to the ambient environment and the treatment equipment. They are also very difficult to separate and recover.

To solve the problem on oil-water separation and oil recovery, researchers have developed a series of super-hydrophilic and underwater super-oleophobic separation membranes and oil-repellent coatings through repeated experiments. These super-hydrophilic and underwater super-oleophobic separation membranes or coatings exhibit an underwater super-hydrophobic property and a low adhesive force to low-viscosity light oil (such as gasoline, light diesel, edible oil, and numerous water-immiscible organic solvents), but exhibit no super-hydrophobic property and adhesion resistance to high-viscosity oil. In practice, these materials are highly susceptible to adhesion and contamination by petroleum, heavy oil, silicone oil, heavy diesel, and other high-viscosity oil, resulting in the loss of special wettability, oil contamination resistance, or oil-water separation property.

### BRIEF SUMMARY OF THE INVENTION

A main object of the present application is to provide a polymer material, a membrane or coating based on the polymer material as well as preparation methods and applications thereof, in order to overcome the defects in the prior art.

To achieve the foregoing inventive object, the present application provides the following technical solution.

An embodiment of the present application provides a polymer material, which is formed by the phase inversion of a polymer compound containing an ionizable hydrophilic group and the ionization of the hydrophilic group.

The polymer material has strong hydratability to form a stable hydration layer on the surface thereof in water, providing protections against oil adhesion and super-oleophobic properties. For example, the polymer material has a static contact angle of greater than 140° and an adhesive force of less than 10 µN with respect to multiple oil phase systems in water.

Further, the polymer compound comprises an aliphatic polymer or aromatic polymer at least modified with any one or two or more of a sulfonate group, a phosphate group, a carboxyl group, an amido group, an alcoholic hydroxyl group, a quaternary ammonium salt, an amino group, an alcoholic amino group, a cyano group, and other groups.

An embodiment of the present application further provides a membrane or coating consisting of the polymer material.

An embodiment of the present application further provides a preparation for the membrane or coating, which comprises:

providing a polymer solution which comprises a polymer compound containing an ionizable hydrophilic group;

coating or immersing a substrate with the polymer solution so that the polymer compound therein is coated or adsorbed onto the substrate to form a polymer compound layer;

fully immersing the polymer compound layer with the alkaline solution to implement phase inversion of the polymer compound while enabling ionization of the hydrophilic group in the polymer compound, thereby forming the membrane or coating on the substrate,

or performing wet phase inversion on the polymer compound in the polymer compound layer and then fully immersing the polymer compound layer with the alkaine solution to ionize the hydrophilic group in the polymer compound, thereby forming the membrane or coating on the substrate.

An embodiment of the present application also provides an application of the polymer material to preparation of an oil-water separation structure, an oil-repellent coating structure, an underwater high-viscosity oil collecting device, a dye separation device, a protein separation device, a heavy metal ion separation device, a food processing device, a blood treatment device, a waste water treatment device and the like.

Compared with the prior art, the present application has the following benefits:
(1) With the ionizable hydrophilic group, the provided polymer material has strong hydratability to form a stable hydration layer on the surface thereof in water, providing protections against oil adhesion and super-oleophobic properties.
(2) The provided polymeric material has an underwater super-hydrophobic property and an anti-adhesion function not only to low-viscosity light oil and water-immiscible organic solvents, but also to petroleum, heavy oil, silicone oil, heavy diesel and other high-viscosity oil.
(3) The membrane, coating and the like formed from the provided polymer material is resistant to oil adhesion and contamination in water along with a self-cleaning effect, and thus has a broad application prospect in a variety of fields, such as oil adhesion and contamination prevention, oil/water separation, oil-repellent coatings, oil spill disposal, as well as separation and collection of high-viscosity oil in water.

### BRIEF DESCRIPTION OF THE SEVERAL VIEWS OF THE DRAWINGS

FIG. 1 illustrates an optical photo of a polymer material (separation membrane) prepared in Embodiment 1 of the present application and a photo showing a contact angle of petroleum on the polymer separation membrane in water.
FIG. 2 illustrates an SEM photo of the polymer material (separation membrane) prepared in Embodiment 1 of the present application.
FIG. 3 illustrates a curve graph of the polymer material (separation membrane) prepared in Embodiment 1 of the present application in an underwater petroleum adhesive force test, and optical photos showing a petroleum drop contacting, pressing and leaving the oil adsorption/adhesion resistant membrane.
FIG. 4 illustrates optical photos of different substrates covered with a polymer material in Embodiment 3 of the present application, and photos showing contact angles of petroleum on the different substrates covered with the oil adsorption/adhesion resistant material.
FIG. 5 illustrates photos, on the left, of gloves covered with a polymer material and self-cleaned in petroleum polluted water as described in Embodiment 3 and Embodiment 15 of the present application, and photos, on the right, of gloves uncovered with a polymer material and cleaned in petroleum polluted water.
FIGs. 6a-6f illustrate SEM photos of a copper mesh covered with the polymer material in Embodiment 3 of the present application.
FIG. 7 illustrates a graph showing a separation flux test in which a copper mesh covered with a polymer material separates an oil/water mixture multiple times as described in Embodiment 6 and Embodiment 16, a graph showing an underwater petroleum content test after separation, and photos showing the copper mesh covered with the polymer material and self-cleaned in water after the separation is completed.
FIG. 8 is a schematic view of the structure of an oil-water separation device in some typical embodiments of the present application, in which 1-oil-water mixture, 2-oil-water separation membrane or oil-water separation device, 3-water, and 4-oil.

### DETAILED DESCRIPTION OF THE INVENTION

Typical embodiments reflecting the features and benefits of the present application will be described in detail in the following description. It should be appreciated that the present application may have various variations in different embodiments without departing from the scope of the present application, and the illustrations and figures therein are essentially for the purpose of illustration but not intended to limit the present application.

Unless otherwise defined, all technical and scientific terms used herein have the same meaning as commonly understood by one of ordinary skill in the art to which the present application belongs. The terminology used in the description of the present application herein is only for the purpose of describing particular embodiments but not intended to be limiting of the present application.

As previously described, by virtue of the existing super-oleophobic materials merely, it is far from sufficient to solve numerous problems in the practical application, for example, the crude oil pollution prevention for instruments and equipment and the separation of high-viscosity oil in a crude oil spill accident. The adhesive force of the materials to the high-viscosity oil should be reduced to solve the adhesion and pollution problems, thereby ensuring the instruments and equipment to function continuously and normally during the separation and collection. This is also the technical problem that the industry has long been eager to solve. The inventor of the subject case provides the technical solutions of the present application based on long-term studies and extensive practices, and gives a good solution to these problems, as will be described in more detail below.

One aspect of the present application provides a polymer material exhibiting no adsorption and adhesion to the high-viscosity oil/grease (such as petroleum, heavy oil, silicone oil, and heavy diesel) in water. Such polymer material consists of a polymer containing hydrophilic functional groups, all or some of which are positively charged, or negatively charged, or positively or negatively charged hydrophilic functional groups or which are produced at least through an ionization process.

In some embodiments, the present application provides a polymer material, which is formed by phase inversion of a polymer compound containing an ionizable hydrophilic group and ionization of the hydrophilic group.

Due to the foregoing special structure of the polymer material, the hydrophilic functional groups contained therein and the ionization of the functional groups are coordinated so that the polymer material has a hydrophilic property and exhibits a static contact angle of greater than 140° and an adhesive force of less than 10 µN with respect to the oil phase systems of both the light oil and the high-viscosity oil in water.

Still further, due to the coordination between the hydrophilic functional groups in the polymer material and the ionization of the functional groups, the polymer material achieves very strong hydratability to form a highly stable hydration protection layer on the surface thereof, and the hydration protection layer can protect the polymer material from direct contact with high-viscosity oil molecules and other molecules, making it difficult for the high-viscosity oil to adsorb and adhere to the polymer material. Therefore, the polymer material and a substrate covered with the polymer material have the underwater super-hydrophobic property and anti-adhesion function to the high-viscosity oil.

In some of the foregoing embodiments, the polymer compound comprises an aliphatic polymer or aromatic polymer at least modified with any one or two or more of a sulfonate group, a phosphate group, a carboxyl group, an amido group, an alcoholic hydroxyl group, a quaternary ammonium salt, an amino group, an alcoholic amino group, a cyano group and other groups, but not limited thereto.

Further, the aliphatic polymer comprises any one of or a copolymer of two or more of polyethylene, polypropylene, polyacrylonitrile, polyvinylidene fluoride, and polyhexafluoropropylene, but not limited thereto.

Further, the aromatic polymer comprises any one of or a copolymer of two or more of polyether sulfone, polyether ketone, polypyrrolone, polypyrrole, and polycarbazole, but not limited thereto.

Preferably, the polymer compound is selected from any one of or a combination of two or more of sulfonated polyether sulfone, diethanolamine-grafted polycarbazole, polyacrylonitrile, methyl imidazole-modified polyphenyl ether, polyacrylamide-grafted polystyrene-stilbene copolymer, phosphate-grafted polyether ketone, polyacrylate-grafted polyvinylidene fluoride, polyvinylsulfonate-grafted polyether sulfone, polyacrylate-grafted polycarbonate, and polymaleic anhydride-grafted polyvinylidene fluoride, but not limited thereto.

Preferably, the solvent in the polymer solution comprises any one of or a combination of two or more of N-methylpyrrolidone, trichloromethane, dioxane, N,N-dimethylformamide, N,N-dimethylacetamide, m-cresol, diphenyl sulfone, diphenyl ether, tetrahydrofuran, and dimethyl sulfoxide.

Further, the polymer solution has a concentration of 0.001wt%-40wt%, for example, 0.001wt%, 0.005wt%, 0.01wt%, 0.05wt%, 0. 1wt%, 0.5wt%, 1wt%, 2wt%, 5wt%, 8wt%, 10wt%, 15wt%, 20wt%, 25wt%, 30wt%, 35wt% or 40wt%, for example, preferably 1wt%-40wt%, further preferably 1wt%-10wt%, and more further preferably 2wt%-8wt%.

In some of the foregoing embodiments, the ionization of the hydrophilic group of the polymer compound is conducted after the polymer compound is fully immersed in an alkaline solution.

More preferably, an alkaline substance contained in the alkaline solution comprises NaOH, KOH, ammonia water, or Na₂CO₃, but not limited thereto.

Further, a solvent contained in the alkaline solution is a poor solvent to the polymer compound, comprising water, methanol, ethanol, ethylene glycol, isopropanol, or n-butanol, but not limited thereto.

Further, the alkaline solution has a concentration of 0.001mol/L-10 mol/L, for example, 0.001mol/L, 0.005 mol/L, 0.01 mol/L, 0.02 mol/L, 0.09 mol/L, 0.05 mol/L, 0. 1 mol/L, 0.5 mol/L, 1 mol/L, 5 mol/L, or 10 mol/L, for example, preferably 0.01 mol/L-10 mol/L, further preferably 0.01 mol/L-1mol/L, and more further preferably 0.05mol/L-0.1mol/L.

In some of the foregoing embodiments, the phase inversion and the ionization are completed in one step; or, the ionization is conducted in the alkaline solution after the phase inversion of the polymer raw material has been completed.

In the present application, temperature, time and other conditions required by the foregoing phase inversion may depend on the type and the like of the polymer compound, which are known to those skilled in the art and common in many articles and works in the art, therefore, elaborations will not be given here in detail any further. For example, in some embodiments, both the foregoing phase inversion and ionization can be completed under a room temperature condition.

The polymer material described in the present application can be used to prepare an oil-water separation structure, an oil-repellent coating structure, an underwater high-viscosity oil collecting device, a dye separation device, a protein separation device, a heavy metal ion separation device, a food processing device, a blood treatment device, a waste water treatment device and the like, and thus is applicable to the fields such as oil-water separation, oil-repellent coatings, marine oil spills, oil spill disposal, underwater high-viscosity oil collection, molecular separation, food processing, pharmaceuticals and medical treatment, wastewater treatment and other fields such as micro-filtration, ultra-filtration, and nano-filtration.

For example, the polymer material provided by the present application can exist in the form of a separation membrane or coating. Therefore, in some embodiments, a membrane or coating consisting of the polymer material is also provided. Such membrane and coating exhibit no adsorption and adhesion to petroleum, heavy oil, silicone oil, heavy diesel and other high-viscosity oil in water, to be specific, the high-viscosity oil cannot adsorb and adhere to the polymer material in water, or even if the polymer material is adhered with the high-viscosity oil in air, the oil will be automatically detached from the polymer material once in water to achieve the oil pollution prevention and self-cleaning effects.

Moreover, the membrane or coating may be a porous membrane, porous coating, or poreless coating.

In some embodiments, a membrane or coating preparation method is also provided, which comprises the following steps:
providing a polymer solution in which a polymer compound (a polymer raw material) containing an ionizable hydrophilic group is comprised;
coating or immersing a substrate with the polymer solution so that the polymer compound therein is coated or adsorbed onto the substrate to form a polymer compound layer;
fully immersing the polymer compound layer with the alkaline solution for phase inversion of the polymer compound and ionization of the hydrophilic group in the polymer compound, thereby forming the membrane or coating on the substrate.

In these foregoing embodiments, fully immersing the polymer compound layer with the alkaline solution allows an organic solvent dissolving the polymer compound to diffuse in the alkaline solution, but the polymer compound is precipitated and formed for phase inversion since it is immiscible with the alkaline poor solvent, and meanwhile, the hydrophilic groups in the polymer compound react with the alkaline substance in the alkaline solution for ionization, thereby forming the membrane or coating on the substrate.

Or, in some embodiments, wet phase inversion may also be performed on the polymer compound in the polymer compound layer and then the polymer compound layer is fully immersed with the alkaine solution to ionize the hydrophilic groups in the polymer compound, thereby forming the membrane or coating on the substrate.

In some more particular embodiments, a method for preparing a membrane or coating covering the surface of a substrate may comprise: dissolving and coating the polymer raw material on the surface of the substrate, or immersing the substrate in a polymer raw material solution to allow the surface of the substrate to be coated or adsorbed with the polymer raw material, then immersing the resulting substrate in the alkaline solution to complete the phase inversion of the polymer material and the reaction for producing the ionized hydrophilic groups in one step.

In some more particular embodiments, a method for preparing a membrane or coating covering the surface of a substrate may also comprise: dissolving and coating the polymer raw material on the surface of the substrate, or immersing the substrate in a polymer raw material solution to allow the surface of the substrate to be coated or adsorbed with the polymer raw material, conducting wet phase inversion, and then immersing the resulting substrate in the alkaline solution to complete the reaction for producing the ionized hydrophilic groups.

The foregoing polymer raw material may be selected at least from any one of aliphatic polymers (including polyethylene, polypropylene, polyacrylonitrile, polyvinylidene fluoride, polyhexafluoropropylene and copolymers thereof) or aromatic polymers (polyether sulfone, polyether ketone, polypyrrolone, polypyrrole, polycarbazole and copolymers thereof) modified with a sulfonate group, a phosphate group, a carboxyl group, an amido group, an alcoholic hydroxyl group, a quaternary ammonium salt, an amino group, an alcoholic amino group, and a cyano group, or from other polymers having similar groups but different main chains, but not limited thereto.

As one of the preferable solutions, the foregoing polymer raw material can be selected from any one of sulfonated polyether sulfone, diethanolamine-grafted polycarbazole, polyacrylonitrile, methyl imidazole-modified polyphenyl ether, polyacrylamide-grafted polystyrene-stilbene copolymer, phosphate-grafted polyether ketone, polyacrylate-grafted polyvinylidene fluoride, polyvinylsulfonate-grafted polyether sulfone, polyacrylate-grafted polycarbonate, and polymaleic anhydride-grafted polyvinylidene fluoride, but not limited thereto.

In the foregoing embodiment, the solvent in the polymer raw material solution can be selected from any one of N-methylpyrrolidone, trichloromethane, dioxane, N,N-dimethylformamide, N,N-dimethylacetamide, m-cresol, diphenyl sulfone, diphenyl ether, tetrahydrofuran, and dimethyl sulfoxide, but not limited thereto.

More preferably, the polymer raw mateiral solution has a concentration of 0.001wt%-40wt%, for example, 0.001wt%, 0.005wt%, 0.01wt%, 0.05wt%, 0. 1wt%, 0.5wt%, 1wt%, 2wt%, 5wt%, 8wt%, 10wt%, 15wt%, 20wt%, 25wt%, 30wt%, 35wt% or 40wt%, for example, preferably 1wt%-40wt%, further preferably 1wt%-10wt%, and more further preferably 2wt%-8wt%.

In the foregoing embodiment, the substrate may be selected at least from any one of glass, metal, plastic, screen, sheet, and fabric.

In the foregoing embodiment, the alkaline solution may be selected at least from any one of NaOH, KOH, ammonia water, and sodium carbonate solution. Preferably, the alkaline solution has a concentration of 0.001 mol/L-10 mol/L, for example, 0.001mol/L, 0.005 mol/L, 0.01 mol/L, 0.02 mol/L, 0.09 mol/L, 0.05 mol/L, 0. 1 mol/L, 0.5 mol/L, 1 mol/L, 5 mol/L, or 10 mol/L, for example, preferably 0.01 mol/L-10 mol/L, further preferably 0.01 mol/L-1mol/L, and more further preferably 0.05mol/L-0.1mol/L.

In the foregoing embodiment, a solvent in the alkaline solution is a poor solvent to the polymer raw material and may be selected at least from water, methanol, ethanol, ethylene glycol, isopropanol, or n-butanol, but not limited thereto.

In the foregoing embodiment, when preparing the membrane, the membrane can be formed with any one of a spinning method, a coating method, an injection method, and a scraping method.

As previously described, the polymer material described in the present application may exist in various forms of coating, porous membrane, porous mesh, and the like.

For example, in some embodiments, the substrate coated with the material also exhibits the underwater oleophobic property (with the oil contact angle > 140°) and low adhesive force (< 10 µN) with respect to the high-viscosity oil when the polymer material exists in the form of oil-repellent coating. Specifically, the high-viscosity oil cannot adhere to the polymer coating in water, or even if the polymer coating is adhered with the high-viscosity oil in air, the oil will be automatically detached from the polymer material once in water, so that the substrate coated with the polymer coating achieves the oil adhesion resistance and self-cleaning performance in water.

For example, in some embodiments, when the polymer material exists in the form of a separation membrane, the separation membrane exhibits excellent oil pollution resistance when separating a non-emulsified oil-water mixture or an emulsified oil-water mixture (oil-water emulsion). Specifically, the separation membrane has a water flux returned to more than 80% after simple water washing.

Accordingly, an embodiment of the present application also provides an application of the polymer material or the membrane or coating to preparation of an oil-water separation structure, an oil-repellent coating structure, an underwater high-viscosity oil collecting device, a dye separation device, a protein separation device, a heavy metal ion separation device, a food processing device, a blood treatment device, a waste water treatment device or other micro-filtration, ultra-filtration and nano-filtration devices.

For example, in some embodiments, an oil-water separation device is also provided, which comprises:
an oil-water separation membrane formed from the polymer material,
or, an oil-water separation element, comprising a substrate which at least has a local surface covered with a coating formed from the polymer material;
wherein a pore channel allowing a water phase in an oil-water mixture to pass and blocking an oil phase is formed in the oil-water separation membrane or the oil-water separation element, and the pore channel at least has a local pore wall formed from the polymer material.

Further, the oil-water separation element may comprise a grid structure formed by crossing grid lines having surfaces covered with the polymer material.

Further, the substrate may comprise a screen, a fabric, a non-woven fabric or a sheet and the like, but not limited thereto.

Further, the oil-water separation device may further comprise a support structure, which is fixedly connected to the oil-water separation membrane or the oil-water separation element. The oil-water separation membrane or the oil-water separation element is able to withstand the impact of a fluid flowing at certain speed by means of the support structure. Such support structure may be in any appropriate form known in the art.

Further, the oil-water mixture comprises a non-emulsified oil-water mixture or oil-water emulsion.

For example, in some embodiments, an underwater high-viscosity oil collecting device is also provided, which is characterized by comprising:
an oil-water separation membrane formed from the polymer material,
or, an oil-water separation element, comprising a substrate which at least has a local surface covered with a coating formed from the polymer material,
wherein a pore channel allowing water or a water solution to pass and retaining oil is formed in the oil-water separation membrane or the oil-water separation element, and the pore channel at least has a local pore wall formed from the polymer material, and preferably, the pore channel has a pore size of less than 500 µm;
and an accommodation space at least for accommodating the oil retained by the oil-water separation membrane or the oil-water separation element.

Further, the oil-water separation element comprises a grid structure formed by crossing grid lines having surfaces covered with the polymer material.

Further, the substrate comprises a screen, a fabric, a non-woven fabric or a sheet and the like, but not limited thereto.

Further, the underwater high-viscosity oil collecting device may further comprise a support structure, which is fixedly connected to the oil-water separation membrane or the oil-water separation element.

Further, the high-viscosity oil comprises petroleum, heavy oil, silicone oil, heavy diesel and the like, but not limited thereto.

For example, in some embodiments, a micro-filtration device is also provided, which is characterized by comprising:
a micro-filtration membrane formed from the polymer material,
or, a micro-filtration element, comprising a substrate which at least has a local surface covered with a coating formed from the polymer material,
wherein a micro-filtration channel is formed in the micro-filtration membrane or the micro-filtration element, and at least has a local inner wall formed from the polymer material. Preferably, the micro-filtration channel has a pore size of 0.01 µm-500 µm.

For example, in some embodiments, an ultra-filtration device is also provided, which is characterized by comprising:
an ultra-filtration membrane formed from the polymer material,
or, an ultra-filtration element, comprising a substrate which at least has a local surface covered with a coating formed from the polymer material,
wherein an ultra-filtration channel is formed in the ultra-filtration membrane or the ultra-filtration element, and at least has a local inner wall formed from the polymer material. Preferably, the ultra-filtration channel has a pore size of 0.002 µm-0.1 µm.

For example, in some embodiments, a nano-filtration device is also provided, which is characterized by comprising:
a nano-filtration membrane formed from the polymer material,
or, a nano-filtration element, comprising a substrate which at least has a local surface covered with a coating formed from the polymer material,
wherein a nano-filtration channel is formed in the nano-filtration membrane or the nano-filtration element, and at least has a local inner wall formed from the polymer material. Preferably, the nano-filtration channel has a pore size of less than 0.002 µm.

The foregoing ultra-filtration or nano-filtration separation device can be used for protein separation, heavy metal ion and dye separation, food processing, blood treatment, wastewater treatment and the like, and has better anti-pollution property.

The definitions of some terms mentioned in the specification of the present application are shown below. Of course, those skilled in the art may also have other appropriate understandings based on the knowledge in the industry.

Adhesion: Adhesion occurs when a force field remaining on a solid surface is in inter-attraction with solid or liquid particles in close contact therewith. The nature of adhesion is the same as that of adsorption, both of which are the result of acting surface forces between two substances. Adhesion may be exhibited by means of friction during relative sliding of two solid phases, aggregation and sintering of solid powder, and other phenomena.

Separation membrane: A separation membrane is a membrane type material with selective permeability and can be divided into micro-filtration membrane, ultra-filtration membrane, nano-filtration membrane, reverse osmosis membrane, pervaporation membrane, ion exchange membrane and the like in terms of separation mechanism and application scope.

Coating: A coating is a solid-state continuous membrane resulting from the paint applied in one step, and it is a thin layer coated on metal, fabric, plastic and other substrates for the purposes of protection, insulation, decoration and the like. The paint may be gaseous, liquid, and solid, and has the type and state usually depending on the substrate to be sprayed on.

Phase inversion: Phase inversion refers to a process in which the polymer solution of a casting solution having a continuous-phase solvent system is inverted into swollen three-dimensional macromolecular network gel having a continuous-phase polymer. This gel constitutes the phase inversion membrane or coating.

Contact angle: A contact angle is a measure of wetness degree, referring to an included angle θ formed when a tangent line of a gas-liquid interface drawn at an intersection point among gas, liquid and solid phases crosses the liquid phase and the solid-liquid boundary line.

Adhesive force: An adhesive force refers to the capability of a material to adhere to the surface of another material. An adhering material generally refers to liquid or powdery solid, and an adhered object refers to an object having certain surface. The magnitude of the adhesive force depends not only on the molecular structure and chemical composition of the adhering material and the surface properties of the adhered object, but also on the external conditions of adhesion, such as temperature, humidity, radiation, vibration, wind speed, etc.

Aliphatic polymer: An aliphatic compound is a generic name for chain hydrocarbons (open-chain hydrocarbons) and cyclic hydrocarbons (other than aromatic compounds) as well as their derivatives. An aliphatic carbocyclic compound is also known as a cycloaliphatic compound. The aliphatic compound covers all varieties of organic compounds, such as alkenes, alkanes, alcohols, ethers, ketones, aldehydes, esters, and the like. An aliphatic polymer is an organic polymer having repeating structural units with particularly large relative molecular weight and formed from a number of aliphatic compounds covalently bonded to each other.

Aromatic polymer: An aromatic compound refers to a class of organic compounds that contain at least one benzene ring with a delocalized bond in a hydrocarbon molecule, and have a unique property (called as aromaticity) different from those of open-chain compounds or alicyclic hydrocarbons. An aromatic polymer is an organic polymer having repeating structural units with particularly large relative molecular weight and formed from a number of aromatic compounds covalently bonded to each other.

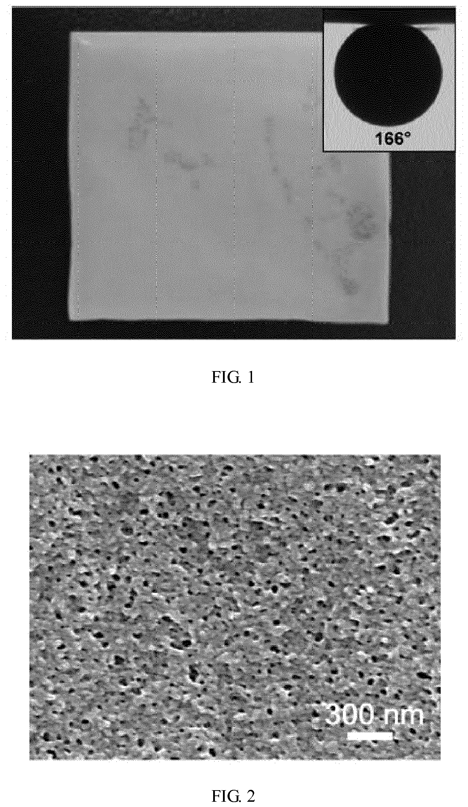

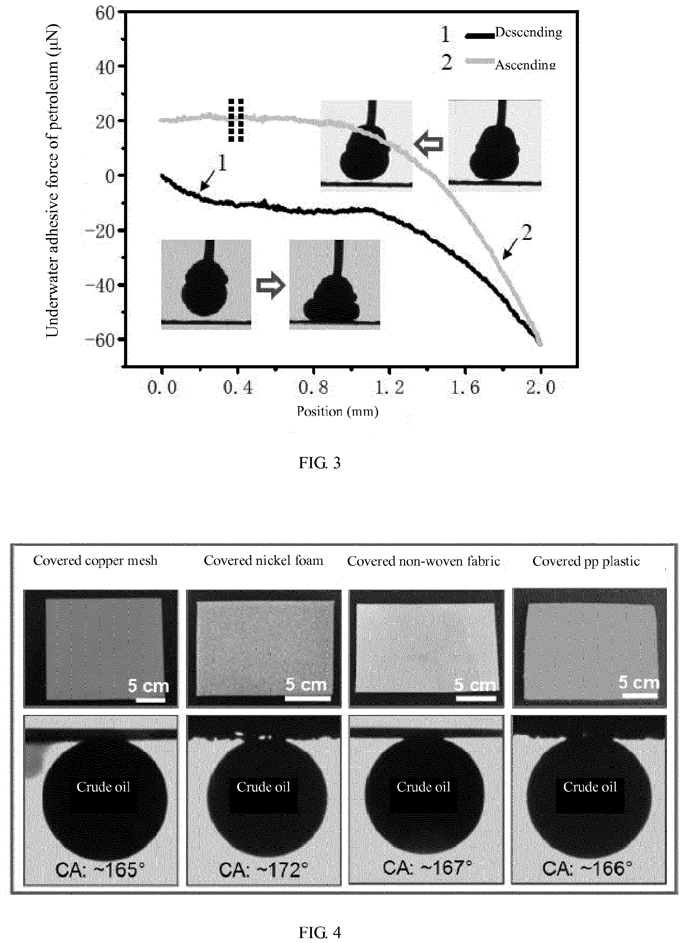

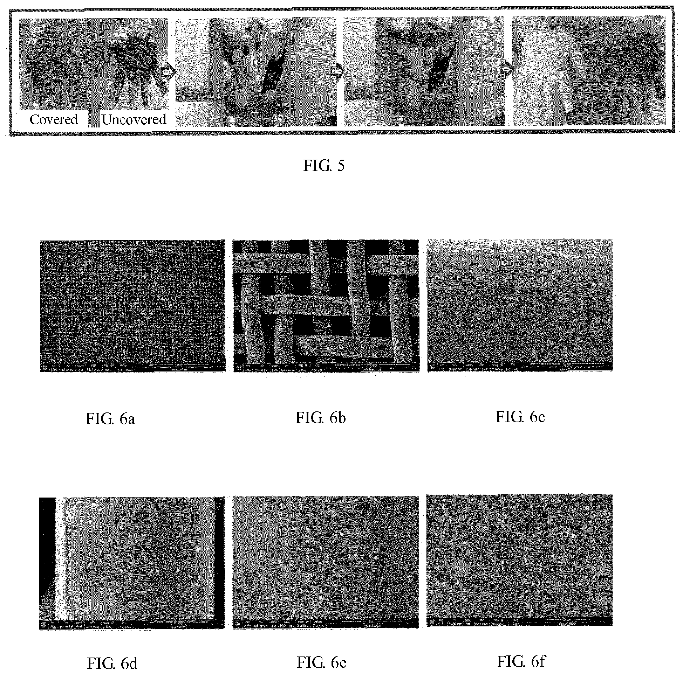

The technical solutions of the present application will be further described below in conjunction with several preferred embodiments and comparative examples. However, the protection scope of the present application is not limited to the content of the following embodiments.
Embodiment 1: Weigh sulfonated polyether sulfone and dissolve it in dimethylformamide to prepare a polymer raw material solution having a concentration of 10wt%. Evenly coat the surface of a clean glass substrate with the polymer raw material solution using a membrane scraping method, and transfer the resulting substrate into a NaOH aqueous solution having a concentration of 0.01 mol/L for the phase inversion, and the reaction to produce ionized hydrophilic functional groups. Remove the substrate from the NaOH aqueous solution 10 min later, and wash the substrate with clear water to remove redundant NaOH, thereby obtaining a finished product of polymer material (a separation membrane). Refer to FIG. 1 and FIG. 2 for the optical photos and surface appearance of the polymer material, in which an underwater contact angle of petroleum is 166° (refer to FIG. 1), an underwater rolling angle of petroleum is 2.4°, and an underwater adhesive force of petroleum is about 0 µN (refer to FIG. 3).
Embodiment 2: Weigh sulfonated polyether sulfone and dissolve it in dimethylformamide to prepare a polymer raw material solution having a concentration of 10wt%. Evenly coat the surface of a clean glass substrate with the polymer raw material solution using a membrane scraping method, then transfer the resulting substrate into a water bath for the phase inversion, and remove the substrate and transfer it into a NaOH aqueous solution having a concentration of 0.1 mol/L 10 min later for the reaction to produce ionized hydrophilic functional groups. Remove the substrate from the NaOH aqueous solution 5 min later, and wash the substrate with clear water to remove redundant NaOH, thereby obtaining a finished product of oil adhesion resistant separation membrane. For this membrane, an underwater contact angle of petroleum is 165°, an underwater rolling angle of petroleum is 2.7°, and an underwater adhesive force of petroleum is about 0 µN.
Embodiment 3: Weigh diethanolamine-grafted polycarbazole and dissolve it in trichloromethane to prepare a polymer raw material solution having a concentration of 1wt%. Immerse a copper mesh, nickel foam, a non-woven fabric, a polypropylene plastic plate, latex gloves and other substrates in the polymer raw material solution for 5h respectively to allow the surface of the respective substrate to adsorb a polymer raw material, and then immerse the same in a NaOH aqueous solution having a concentration of 0.01 mol/L for the phase inversion, and the reaction to produce the ionized hydrophilic function groups. Remove the substrate from the NaOH aqueous solution 10 min later, and wash the substrate with clear water to remove redundant NaOH, thereby obtaining an oil adhesion resistant coating covering the surface of the substrate. Refer to FIG. 4 for the optical photos and underwater contact angle of petroleum with respect to the coating. For the respective substrate having the surface covered with the oil adhesion resistant coating, an underwater contact angle of petroleum is more than 150°, an underwater rolling angle of petroleum is less than 10°, and an underwater adhesive force of petroleum is less than 10 µN. Refer to FIGs. 6a-6f for the surface appearance of the copper mesh having the surface covered with the oil adhesion resistant coating.
Embodiment 4: Weigh diethanolamine-grafted polycarbazole and dissolve it in trichloromethane to prepare a solution having a concentration of 1wt%. Immerse a copper mesh, nickel foam, a non-woven fabric, a polypropylene plastic plate, latex gloves and other substrates in the polymer raw material solution for 5h respectively to allow the surface of the respective substrate to adsorb a polymer raw material, then transfer the substrate into a water bath for the phase inversion, and remove and transfer the substrate into a NaOH aqueous solution having a concentration of 0.1 mol/L 10 min later for the reaction to produce ionized hydrophilic functional groups. Remove the substrate from the NaOH aqueous solution 5 min later, and wash the substrate with clear water to remove redundant NaOH, thereby obtaining an oil adhesion resistant coating covering the surface of the substrate. For the respective substrate having the surface covered with the oil adhesion resistant coating, an underwater contact angle of petroleum is more than 150°, an underwater rolling angle of petroleum is less than 10°, and an underwater adhesive force of petroleum is less than 10 µN.
Embodiment 5: Weigh methylimidazole-modified polyphenyl ether and dissolve it in N,N-dimethylacetamide to prepare a solution having a concentration of 1wt%. Immerse a cooper mesh, nickel foam, a non-woven fabric, a polypropylene plastic plate, latex gloves and other substrates in the polymer raw material solution for 5h respectively to allow the surface of the substrate to adsorb a polymer raw material, and then immerse the same in a NaOH aqueous solution having a concentration of 0.01 mol/L for the phase inversion, and the reaction to produce the ionized hydrophilic function groups. Remove the substrate from the NaOH aqueous solution 10 min later, and wash the substrate with clear water to remove redundant NaOH, thereby obtaining an oil adhesion resistant coating covering the surface of the substrate. For the respective substrate having the surface covered with the oil adhesion resistant coating, an underwater contact angle of petroleum is more than 150°, an underwater rolling angle of petroleum is less than 10°, and an underwater adhesive force of petroleum is less than 10 µN.
Embodiment 6: Weigh polyacrylate-grafted polyvinylidene fluoride and dissolve it in N,N-dimethylacetamide to prepare a solution having a concentration of 1wt%. Immerse a copper mesh, nickel foam, a non-woven fabric, a polypropylene plastic plate, latex gloves and other substrates in the polymer raw material solution for 5h respectively to allow the surface of the respective substrate to adsorb a polymer raw material, then transfer the substrate into a water bath for the phase inversion, and remove and transfer the substrate into a NaOH aqueous solution having a concentration of 0.1 mol/L 10 min later for the reaction to produce ionized hydrophilic functional groups. Remove the substrate from the NaOH aqueous solution 5 min later, and wash the substrate with clear water to remove redundant NaOH, thereby obtaining an oil adhesion resistant coating covering the surface of the substrate. For the respective substrate having the surface covered with the oil adhesion resistant coating, an underwater contact angle of petroleum is more than 150°, an underwater rolling angle of petroleum is less than 10°, and an underwater adhesive force of petroleum is less than 10 µN.
Embodiment 7: Weigh phosphate-grafted polyether ketone and dissolve it in N-methylpyrrolidone to prepare a solution having a concentration of 10wt%. Evenly coat the surface of a clean glass substrate with the solution using a membrane scraping method, then transfer the resulting substrate into a water bath for the phase inversion, and remove the substrate and transfer it into a NaOH aqueous solution having a concentration of 0.1 mol/L 10 min later for the reaction to produce ionized hydrophilic functional groups. Remove the substrate from the NaOH aqueous solution 5 min later, and wash the substrate with clear water to remove redundant NaOH, thereby obtaining a finished product of oil adhesion resistant separation membrane. For this membrane, an underwater contact angle of petroleum is 164°, an underwater rolling angle of petroleum is 2.6°, and an underwater adhesive force of petroleum is about 0 µN.
Embodiment 8: Weigh polyacrylamide-grafted polystyrene-stilbene copolymer and dissolve it in dimethyl sulfoxide to prepare a solution having a concentration of 10wt%. Evenly coat the surface of a clean stainless steel plate with the solution, and then immerse the stainless steel plate in a NaOH aqueous solution having a concentration of 0.01 mol/L for the phase inversion, and the reaction to produce ionized hydrophilic functional groups. Remove the stainless steel plate from the NaOH aqueous solution 10 min later, and wash it with clear water to remove redundant NaOH, thereby obtaining an oil adhesion resistant coating covering the surface of the stainless steel plate. For the stainless steel plate having the surface covered with the oil adhesion resistant coating, an underwater contact angle of petroleum is 167°, an underwater rolling angle of petroleum is 2.4°, and an underwater adhesive force of petroleum is about 0 µN.
Embodiment 9: Weigh polymaleic anhydride-grafted polyether ketone and dissolve it in N-methylpyrrolidone to prepare a solution having a concentration of 10wt%. Evenly coat the surface of a clean stainless steel plate with the solution, and then immerse the stainless steel plate in a NaOH aqueous solution having a concentration of 0.01 mol/L for the phase inversion, and the reaction to produce ionized hydrophilic functional groups. Remove the stainless steel plate from the NaOH aqueous solution 10 min later, and wash it with clear water to remove redundant NaOH, thereby obtaining an oil adhesion resistant coating covering the surface of the stainless steel plate. For the stainless steel plate having the surface covered with the oil adhesion resistant coating, an underwater contact angle of petroleum is 164°, an underwater rolling angle of petroleum is 2.7°, and an underwater adhesive force of petroleum is about 0 µN.
Embodiment 10: Weigh polyacrylamide-grafted polyvinylidene fluoride and dissolve it in N-methylpyrrolidone to prepare a solution having a concentration of 10wt%. Evenly coat the surface of a clean stainless steel plate with the solution, then transfer the stainless steel plate into a water bath for the phase inversion, and remove and transfer the stainless steel plate into a NaOH aqueous solution having a concentration of 0.1 mol/L 10 min later for the reaction to produce ionized hydrophilic functional groups. Remove the stainless steel plate from the NaOH aqueous solution 5 min later, and wash it with clear water to remove redundant NaOH, thereby obtaining an oil adhesion resistant coating covering the surface of the stainless steel plate. For the stainless steel plate having the surface covered with the oil adhesion resistant coating, an underwater contact angle of petroleum is 166°, an underwater rolling angle of petroleum is 2.5°, and an underwater adhesive force of petroleum is about 0 µN.

Comparative Example 1: Weigh polyacrylamide-grafted polystyrene-stilbene copolymer and dissolve it in dimethyl sulfoxide to prepare a solution having a concentration of 10wt%. Evenly coat the surface of a clean stainless steel plate with the solution, then immerse the resulting stainless steel plate in water for phase inversion, and remove it 10 min later, thereby obtaining a polymer coating covering the surface of the stainless steel plate.
Comparative Example 2: Weigh polymaleic anhydride-grafted polyether ketone and dissolve it in N-methylpyrrolidone to prepare a solution having a concentration of 10wt%. Evenly coat the surface of a clean stainless steel plate with the solution, then immerse the resulting stainless steel plate in water for phase inversion, and remove it 10 min later, thereby obtaining a polymer coating covering the surface of the stainless steel plate.
Comparative Example 3: Weigh polyacrylamide-grafted polyvinylidene fluoride and dissolve it in N-methylpyrrolidone to prepare a solution having a concentration of 10wt%. Evenly coat the surface of a clean stainless steel plate with the solution, then immerse the resulting stainless steel plate in water for phase inversion, and remove it 10 min later, thereby obtaining a polymer coating covering the surface of the stainless steel plate.
Comparative Example 4: Weigh polystyrene-stilbene copolymer and dissolve it in dimethyl sulfoxide to prepare a solution having a concentration of 10wt%. Evenly coat the surface of a clean stainless steel plate with the solution, and then immerse the resulting stainless steel plate in a NaOH aqueous solution having a concentration of 0.01 mol/L for the phase inversion and the reaction. Remove the stainless steel plate from the NaOH aqueous solution 10 min later, and wash it with clear water to remove redundant NaOH, thereby obtaining a polymer coating covering the surface of the stainless steel plate.
Comparative Example 5: Weigh polyether ketone and dissolve it in N-methylpyrrolidone to prepare a solution having a concentration of 10wt%. Evenly coat the surface of a clean stainless steel plate with the solution, and then immerse the resulting stainless steel plate in a NaOH aqueous solution having a concentration of 0.01 mol/L for the phase inversion and the reaction. Remove the stainless steel plate from the NaOH aqueous solution 10 min later, and wash it with clear water to remove redundant NaOH, thereby obtaining a polymer coating covering the surface of the stainless steel plate.
Comparative Example 6: Weigh polyvinylidene fluoride and dissolve it in N-methylpyrrolidone to prepare a solution having a concentration of 10wt%. Evenly coat the surface of a clean stainless steel plate with the solution, then transfer the resulting stainless steel plate into a water bath for the phase inversion, and remove and transfer the stainless steel plate into a NaOH aqueous solution having a concentration of 0.1 mol/L 10 min later for the reaction. Remove the stainless steel plate from the NaOH aqueous solution 5 min later, and wash it with clear water to remove redundant NaOH, thereby obtaining a polymer coating covering the surface of the stainless steel plate.

The resulting coatings from Embodiments 8, 9 and 10 and Comparative Examples 1, 2 and 3 are compared by testing the underwater contact angle, rolling angle and adhesive force of petroleum with respect to respective coatings using an OCA20 contact angle tester and a Dataphysics surface/interface tension meter DCAT21, and each sample is tested three times to each test to obtain a mean value, with the test results shown in Tables 1, 2 and 3 below.

**Table 1. Test results on underwater oleophobic property and adhesive force of coatings obtained from Embodiment 8 and Comparative Example 1**

| | Embodiment 8 | Comparative Example 1 |
|---|---|---|
| Underwater contact angle of petroleum | 167° | 154° |
| Underwater rolling angle of petroleum | 2.4° | > 90° |
| Underwater adhesive force of petroleum | 0 µN | 11.4 µN |

**Table 2. Test results on underwater oleophobic property and adhesive force of coatings obtained from Embodiment 9 and Comparative Example 2**

| | Embodiment 9 | Comparative Example 2 |
|---|---|---|
| Underwater contact angle of petroleum | 164° | 147° |
| Underwater rolling angle of petroleum | 2.7° | > 90° |
| Underwater adhesive force of petroleum | 0 µN | 13.2 µN |

**Table 3. Test results on underwater oleophobic property and adhesive force of coatings obtained from Embodiment 10 and Comparative Example 3**

| | Embodiment 10 | Comparative Example 3 |
|---|---|---|
| Underwater contact angle of petroleum | 166° | 151° |
| Underwater rolling angle of petroleum | 2.5° | > 90° |
| Underwater adhesive force of petroleum | 0 µN | 12.7 µN |

As can be seen from the comparisons on the coatings obtained from Embodiments 8-9 and Comparative Examples 1-3 shown in Tables 1, 2 and 3, there is a huge difference in the underwater oleophobic property and adhesive force between the materials respectively obtained with the preparation methods disclosed by the present application and the common phase inversion methods with respect to such high-viscosity oil as petroleum under the same condition of raw materials. The polymer materials obtained with the preparation methods disclosed by the present application has super-hydrophobic and ultralow-adhesion properties to the high-viscosity oil in water, while the materials obtained with the common phase inversion methods have no such properties.

The resulting coatings from Embodiments 8, 9 and 10 and Comparative Examples 4, 5 and 6 are compared by testing the underwater contact angle, rolling angle and adhesive force of petroleum with respect to respective coatings using an OCA20 contact angle tester and a Dataphysics surface/interface tension meter DCAT21, and each sample is tested three times as to each test to obtain a mean value.

The coatings obtained from Comparative Examples 4, 5 and 6 exhibit overhigh underwater adhesive force to the petroleum, where a petroleum drop adhered to respective coatings cannot be detached from the surface of the coating even though the petroleum drop is broken by stretching when the Dataphysics surface/interface tension meter DCAT21 is used for testing. Therefore, the value of adhesive force cannot be measured (which exceeds the measurement range of this meter and thus is far more than the underwater adhesive force of petroleum with respect to the coatings obtained from Embodiments 8, 9 and 10). The test results on the underwater contact angle and rolling angle of petroleum with respect to respective coatings are shown in Tables 4, 5 and 6 below.

**Table 4. Test results on underwater oleophobic property of coatings obtained from Embodiment 8 and Comparative Example 4**

| | Embodiment 8 | Comparative Example 4 |
|---|---|---|
| Underwater contact angle of petroleum | 167° | 132° |
| Underwater rolling angle of petroleum | 2.4° | > 90° |

**Table 5. Test results on underwater oleophobic property of coatings obtained from Embodiment 9 and Comparative Example 5**

| | Embodiment 9 | Comparative Example 5 |
|---|---|---|
| Underwater contact angle of petroleum | 164° | 125° |
| Underwater rolling angle of petroleum | 2.7° | > 90° |

**Table 6. Test results on underwater oleophobic property of coatings obtained from Embodiment 10 and Comparative Example 6**

| | Embodiment 10 | Comparative Example 6 |
|---|---|---|
| Underwater contact angle of petroleum | 166° | 119° |
| Underwater rolling angle of petroleum | 2.5° | > 90° |

Similarly, the membrane and coatings from the foregoing Embodiments 1-10 also exhibit no underwater adhesion to heavy oil, silicone oil, heavy diesel and other high-viscosity oil as well as edible oil and the like.
Embodiment 11: Weigh polyacrylate-grafted polyvinylidene fluoride and polyvinylidene fluoride at a mass ratio of 1:2, dissolve them in N,N-dimethylacetamide to prepare a solution having a total concentration of 10wt%. Evenly coat the surface of a clean glass substrate with the solution using a membrane scraping method, then transfer the resulting substrate into a water bath for the phase inversion, and remove the substrate and transfer it into a NaOH aqueous solution having a concentration of 10 mol/L 10 min later for the reaction to produce ionized hydrophilic functional groups. Remove the substrate from the NaOH aqueous solution 1 min later, and wash the substrate with clear water to remove redundant NaOH, thereby obtaining a finished product of oil adhesion resistant separation membrane. For this oil adhesion resistant separation membrane, an underwater contact angle of petroleum is 165°, an underwater rolling angle of petroleum is 2.9°, and an underwater adhesive force of petroleum is about 0 µN.
Embodiment 12: Weigh polyacrylonitrile and dissolve it in N,N-dimethylacetamide to prepare a solution having a concentration of 8wt%. Evenly coat the surface of a clean glass substrate with the polymer raw material solution using a membrane scraping method, then transfer the resulting substrate into a water bath for the phase inversion, and remove the substrate and transfer it into a NaOH aqueous solution having a concentration of 0.1 mol/L 10 min later for the reaction to produce ionized hydrophilic functional groups. Remove the substrate from the NaOH aqueous solution 1 min later, and wash the substrate with clear water to remove redundant NaOH, thereby obtaining a finished product of oil adhesion resistant separation membrane. For this oil adhesion resistant separation membrane, an underwater contact angle of petroleum is 166°, an underwater rolling angle of petroleum is 2.7°, and an underwater adhesive force of petroleum is about 0 µN.
Embodiment 13: Weigh polyacrylamide -grafted polyvinylidene fluoride and dissolve it in N,N-dimethylacetamide to prepare a solution having a concentration of 2wt%. Immerse a clean polymer membrane (such as polytetrafluoroethylene) or ceramic membrane (such as a zirconium oxide membrane, and an anodized aluminum membrane) in the polymer raw material solution for 5h to allow the surface of the substrate to adsorb a polymer raw material, and then immerse the same in an ammonia water solution having a concentration of 5mol/L for the phase inversion, and the reaction to produce the ionized hydrophilic function groups. Remove the substrate from the ammonia water solution 10 min later, and wash the substrate with clear water to remove redundant ammonia water, thereby obtaining a polymer membrane or ceramic membrane having the surface covered with the oil adhesion resistant coating (where the pore size of the membrane is optional within the range of 0.001 µm-100 µm). For the polymer membrane or ceramic membrane having the surface covered with the oil adhesion resistant coating, an underwater contact angle of petroleum is more than 150°, an underwater rolling angle of petroleum is less than 10°, and an underwater adhesive force of petroleum is less than 10 µN.
Embodiment 14: Weigh polyacrylate-grafted polyvinylidene fluoride and dissolve it in N,N-dimethylacetamide to prepare a solution having a concentration of 9wt%. Evenly coat the surface of a clean polymer membrane (such as polytetrafluoroethylene) or ceramic membrane (such as a zirconium oxide membrane, and an anodized aluminum membrane) with the polymer raw material solution using a membrane scraping method, then transfer the resulting polymer membrane or ceramic membrane into a water bath for the phase inversion, and remove and transfer it into a KOH solution having a concentration of 0.001mol/L for the reaction to produce the ionized hydrophilic function groups. Remove the resulting polymer membrane or ceramic membrane from the KOH solution 5 min later, and wash it with clear water to remove redundant KOH, thereby obtaining a polymer membrane or ceramic membrane having the surface covered with the oil adhesion resistant coating (where the pore size of the membrane is optional within the range of 0.001 µm-100 µm). For the polymer membrane and ceramic membrane having the surface covered with the oil adhesion resistant coating, an underwater contact angle of petroleum is more than 150°, an underwater rolling angle of petroleum is less than 10°, and an underwater adhesive force of petroleum is less than 10 µN.
Embodiment 15: Pour petroleum on the latex gloves having the surfaces covered with the oil adhesion resistant coatings from Embodiment 3 for contamination; and simultaneously pour the petroleum on the same latex gloves having the surfaces not coated with the oil adhesion resistant coatings for contamination as a control. Place the two gloves into the same pure water simultaneously, where the petroleum on the latex gloves having the surfaces covered with the oil adhesion resistant coatings fell off automatically to achieve the self-cleaning effect for the gloves; and the petroleum on the latex gloves having the surfaces not coated with the oil adhesion resistant coatings was still firmly adhered to the surfaces of the gloves without falling, thus the self-cleaning effect cannot be achieved for the gloves. Refer to FIG. 5 for the self-cleaning performance of the latex gloves having the surfaces covered with the oil adhesion resistant coatings in water.

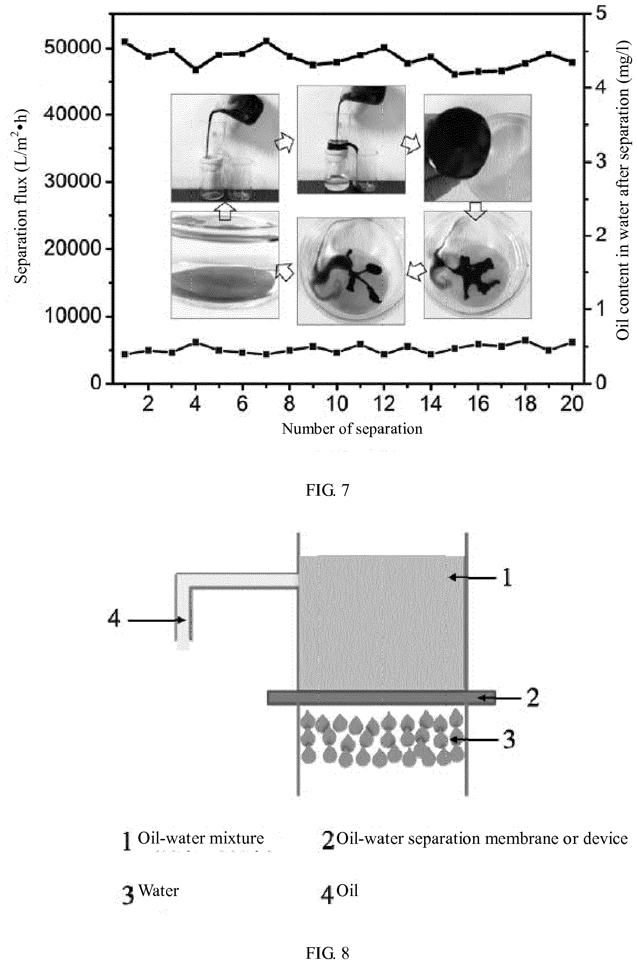

In addition, the inventor of the subject case also prepared membranes or coatings from the polymer solutions having the concentrations of 0.001wt%, 0.005wt%, 0.01wt%, 0.05wt%, 0.1wt%, 0.5wt%, 15wt%, 20wt%, 25wt%, 30wt%, 35wt%, and 40wt% as raw materials with reference to the implementation solutions of Embodiments 1-15, and these membranes or coatings also have the oil adhesion resistance.
Embodiment 16: Mix petroleum and water at a volume ratio of 1: 1 to form an oil-water mixture, and separate the oil-water mixture by an oil-water separation device including a 400-mesh copper mesh having a surface covered with an oil adhesion resistant coating from Embodiment 6, where the copper mesh having the surface covered with the oil adhesion resistant coating has a pore size of 25 µm-30 µm. Refer to FIG. 8 for the structure and working principle of the oil-water separation device. Through the separation, the petroleum was effectively retained by the copper mesh having the surface covered with the oil adhesion resistant coating and was then enriched and recovered, while the water flowed through the copper mesh having the surface covered with the oil adhesion resistant coating and was purified, and the copper mesh having the surface covered with the oil adhesion resistant coating may achieve the self-cleaning effect in water and be repeated in use for a long term. The water flux was 47000 ± 3000 L/(m²hbar) during separation, and the oil content in the purified water after separation was measured to be 0.5ppm (i.e. 0.5 parts per million by mass) by a total organic carbon analyzer. Refer to FIG. 8 for the oil-water separation performance of the copper mesh having the surface covered with the oil adhesion resistant coating.
Embodiment 17: Mix diesel and water at a mass ratio of 1:9, add sodium dodecyl benzene sulfonate having a concentration of 0.1 g/L as an emulsifier, stir a resulting mixture at 2000 rpm for 2h to prepare oil-water emulsion, and separate the oil-water emulsion by an oil-water separation device (refer to FIG. 8 for its structure and principle) containing the oil adhesion resistant separation membrane from Embodiment 11, where the membrane has an effective pore size of 0.01 µm. By the separation, the emulsified diesel was effectively retained by the oil adhesion resistant separation membrane and then enriched and recovered, while the water flowed through the oil adhesion resistant separation membrane and was purified. The water flux was 550 L/(m²hbar) during separation, and the oil content in the purified water after separation was measured to be 3ppm (i.e. 3 parts per million by mass) by the total organic carbon analyzer.
Embodiment 18: Dissolve a dye, i.e., coomassie brilliant blue, in water to prepare a solution having a concentration of 50 mg/L, and separate the solution by a separation device containing the oil adhesion resistant separation membrane from Embodiment 12, where the membrane has an effective pore size of 0.002 µm. By the separation, the coomassie brilliant blue was effectively retained by the oil adhesion resistant separation membrane, while the water flowed through the separation membrane and was purified. The water flux was 130 L/(m²hbar) during separation, and for the coomassie brilliant blue in the purified water after separation, the effective retention rate was measured to be 98.0% by an ultraviolet and visible spectrophotometer. The dye retained on the separation membrane after separation can be washed away simply with water.
Embodiment 19: Dissolve bovine serum albumin in water to prepare a solution having a concentration of 5 g/L, and separate the solution by a separation device containing the oil adhesion resistant membrane from Embodiment 13, where the membrane has an effective pore size of 0.002 µm. By the separation, the bovine serum albumin was effectively retained by the oil adhesion resistant separation membrane, while the water flowed through the separation membrane and was purified. The water flux was 125 L/(m²hbar) during separation, and for the bovine serum albumin in the purified water after separation, the effective retention rate was measured to be 98.5% by the ultraviolet and visible spectrophotometer. The albumin retained on the separation membrane after separation can be washed away simply with water.
Embodiment 20: Dissolve CuSO₄ in water to prepare a solution having a concentration of 2000 ppm, and separate the solution by a separation device containing the anodized aluminum membrane having the surface covered with the oil adhesion resistant coating from Embodiment 14. The water flux was 120 L/(m²hbar) during separation, and for the Na₂SO₄ in the purified water after separation, the effective retention rate was measured to be 56.2% by an conductivity meter.

As can be seen from the above comparison results, when the raw materials not disclosed by the present application are used and the raw materials contain no particular modifying groups disclosed by the present application, the polymer material having the underwater super-hydrophobic and ultralow-adhesion properties to the high-viscosity oil cannot be produced even using the preparation methods disclosed by the present application.

It should be appreciated that the present application reveals one or more preferred embodiments, and any partial alternations or modifications derived from the technical concept of the present application and easy to infer by those familiar with this technology are construed to fall within the patent scope of the present application.

## Claims

1. A polymer material, **characterized in that** the polymer material is formed by phase inversion of a polymer compound containing an ionizable hydrophilic group and ionization of the hydrophilic group contained, and concurrently the polymer material has a static contact angle of greater than 140° and an adhesive force of less than 10 µN with respect to an oil phase system in water.

2. The polymer material according to Claim 1, **characterized in that** the ionization of the hydrophilic group of the polymer compound is conducted after the polymer compound is fully immersed by an alkaline solution.

3. The polymer material according to Claim 2, **characterized in that** an alkaline substance contained in the alkaline solution comprises NaOH, KOH, ammonia water or Na₂CO₃.

4. The polymer material according to Claim 2, **characterized in that** a solvent contained in the alkaline solution is a poor solvent to the polymer compound.

5. The polymer material according to Claim 4, **characterized in that** the solvent comprises water, methanol, ethanol, ethylene glycol, isopropanol or n-butanol.

6. The polymer material according to Claim 2, **characterized in that** the alkaline solution has a concentration of 0.001 mol/L-10 mol/L.

7. The polymer material according to Claim 1, **characterized in that** the polymer compound comprises an aliphatic polymer or aromatic polymer at least modified with any one or two or more of a sulfonate group, a phosphate group, a carboxyl group, an amido group, an alcoholic hydroxyl group, a quaternary ammonium salt, an amino group, an alcoholic amino group, and a cyano group.

8. The polymer material according to Claim 7, **characterized in that** the aliphatic polymer comprises any one of or a copolymer of two or more of polyethylene, polypropylene, polyacrylonitrile, polyvinylidene fluoride, and polyhexafluoropropylene.

9. The polymer material according to Claim 7, **characterized in that** the aromatic polymer comprises any one of or a copolymer of two or more of polyether sulfone, polyether ketone, polypyrrolone, polypyrrole, and polycarbazole.

10. The polymer material according to Claim 7, **characterized in that** the polymer compound is selected from any one of or a combination of two or more of sulfonated polyether sulfone, diethanolamine-grafted polycarbazole, polyacrylonitrile, methylimidazole-modified polyphenyl ether, polyacrylamide-grafted polystyrene-stilbene copolymer, phosphate-grafted polyether ketone, polyacrylate-grafted polyvinylidene fluoride, polyvinylsulfonate-grafted polyether sulfone, polyacrylate-grafted polycarbonate, and polymaleic anhydride-grafted polyvinylidene fluoride.

11. The polymer material according to anyone of Claims 1-10, **characterized in that** the phase inversion and the ionization are completed in one step.

12. The polymer material according to anyone of Claims 1-10, **characterized in that** the ionization is conducted in the alkaline solution after the phase inversion.

13. A membrane or coating consisting of the polymer material of anyone of Claims 1-12.

14. The membrane or coating according to Claim 13, **characterized in that** the membrane or coating is a porous membrane, porous coating or poreless coating.

15. A membrane or coating preparation method, **characterized by** comprising the following steps:
Providing a polymer compound solution in which a polymer compound containing an ionizable hydrophilic group is comprised;
coating or immersing a substrate with the polymer compound solution so that the polymer compound is coated or adsorbed onto the substrate to form a polymer compound layer;
fully immersing the polymer compound layer with the alkaline solution to implement phase inversion of the polymer compound while enabling ionization of the hydrophilic group in the polymer compound, thereby forming the membrane or coating on the substrate,
or performing wet phase inversion on the polymer compound in the polymer compound layer and then fully immersing the polymer compound layer with the alkaine solution to ionize the hydrophilic group in the polymer compound, thereby forming the membrane or coating on the substrate.

16. The preparation method according to Claim 15, **characterized in that** an alkaline substance contained in the alkaline solution comprises NaOH, KOH, ammonia water or sodium carbonate.

17. The preparation method according to Claim 15, **characterized in that** a solvent contained in the alkaline solution is a poor solvent to the polymer compound.

18. The preparation method according to Claim 17, **characterized in that** the solvent comprises water, methanol, ethanol, ethylene glycol, isopropanol or n-butanol.

19. The preparation method according to Claim 15, **characterized in that** the alkaline solution has a concentration of 0.001 mol/L-10 mol/L.

20. The preparation method according to Claim 15, **characterized in that** the polymer compound comprises an aliphatic polymer or aromatic polymer at least modified with any one or two or more of a sulfonate group, a phosphate group, a carboxyl group, an amido group, an alcoholic hydroxyl group, a quaternary ammonium salt, an amino group, an alcoholic amino group, and a cyano group.

21. The preparation method according to Claim 20, **characterized in that** the aliphatic polymer comprises any one of or a copolymer of two or more of polyethylene, polypropylene, polyacrylonitrile, polyvinylidene fluoride, and polyhexafluoropropylene.

22. The preparation method according to Claim 20, **characterized in that** the aromatic polymer comprises any one of or a copolymer of two or more of polyether sulfone, polyether ketone, polypyrrolone, polypyrrole, and polycarbazole.

23. The preparation method according to Claim 20, **characterized in that** the polymer compound is selected from any one of or a combination of two or more of sulfonated polyether sulfone, diethanolamine-grafted polycarbazole, polyacrylonitrile, methylimidazole-modified polyphenyl ether, polyacrylamide-grafted polystyrene-stilbene copolymer, phosphate-grafted polyether ketone, polyacrylate-grafted polyvinylidene fluoride, polyvinylsulfonate-grafted polyether sulfone, polyacrylate-grafted polycarbonate, and polymaleic anhydride-grafted polyvinylidene fluoride.

24. The preparation method according to Claim 15, **characterized in that** the solvent in the polymer compound solution comprises any one of or a combination of two or more of N-methylpyrrolidone, trichloromethane, dioxane, N,N-dimethylformamide, N,N-dimethylacetamide, m-cresol, diphenyl sulfone, diphenyl ether, tetrahydrofuran, and dimethyl sulfoxide.

25. The preparation method according to Claim 15, **characterized in that** the polymer compound solution has a concentration of 0.001wt% - 40wt%.

26. The preparation method according to Claim 15, **characterized in that** the substrate comprises any one of a screen, a fabric, a non-woven fabric, and a sheet.

27. An application of the polymer material of anyone of Claims 1-12 and the membrane or coating of anyone of Claims 13-14 to preparation of an oil-water separation structure, an oil-repellent coating structure, an underwater high-viscosity oil collecting device, a dye separation device, a protein separation device, a heavy metal ion separation device, a food processing device, a blood treatment device, or a waste water treatment device.

28. An oil-water separation device, **characterized by** comprising:
an oil-water separation membrane formed from the polymer material of anyone of Claims 1-12,
or, an oil-water separation element, comprising a substrate which at least has a local surface covered with a coating formed from the polymer material of anyone of Claims 1-12,
wherein a pore channel allowing a water phase in an oil-water mixture to pass and blocking an oil phase is formed in the oil-water separation membrane or the oil-water separation element, and the pore channel at least has a local pore wall formed from the polymer material.

29. The oil-water separation device according to Claim 28, **characterized in that** the oil-water separation element comprises a grid structure formed by crossing grid lines having surfaces covered with the polymer material.

30. The oil-water separation device according to anyone of Claims 28-29, **characterized in that** the substrate comprises a screen, a fabric, a non-woven fabric, or a sheet.

31. The oil-water separation device according to Claim 28, **characterized by** further comprising a support structure, which is fixedly connected to the oil-water separation membrane or the oil-water separation element.

32. The oil-water separation device according to Claim 28, **characterized in that** the oil-water mixture comprises a non-emulsified oil-water mixture or oil-water emulsion.

33. An underwater high-viscosity oil collecting device, **characterized by** comprising:
An oil-water separation membrane formed from the polymer material of anyone of Claims 1-12,
or, an oil-water separation element, comprising a substrate which at least has a local surface covered with a coating formed from the polymer material of anyone of Claims 1-12,
wherein a pore channel allowing water or a water solution to pass and retaining oil is formed in the oil-water separation membrane or the oil-water separation element, and the pore channel at least has a local pore wall formed from the polymer material; and preferably, the pore channel has a pore size of more than 0 and less than 500 µm;
and an accommodation space at least for accommodating the oil retained by the oil-water separation membrane or the oil-water separation element.

34. The underwater high-viscosity oil collecting device according to Claim 33, **characterized in that** the oil-water separation element comprises a grid structure formed by crossing grid lines having surfaces covered with the polymer material.

35. The underwater high-viscosity oil collecting device according to anyone of Claims 33-34, **characterized in that** the substrate comprises a screen, a fabric, a non-woven fabric, or a sheet.

36. The underwater high-viscosity oil collecting device according to Claim 33, **characterized by** further comprising a support structure, which is fixedly connected to the oil-water separation membrane or the oil-water separation element.

37. The underwater high-viscosity oil collecting device according to Claim 33, **characterized in that** the high-viscosity oil comprises petroleum, heavy oil, silicone oil, or heavy diesel.

38. A micro-filtration device, **characterized by** comprising:
a micro-filtration membrane formed from the polymer material of anyone of Claims 1-12,
or, a micro-filtration element, comprising a substrate which at least has a local surface covered with a coating formed from the polymer material of anyone of Claims 1-12,
wherein a micro-filtration channel is formed in the micro-filtration membrane or the micro-filtration element, and at least has a local inner wall formed from the polymer material; and preferably, the micro-filtration channel has a pore size of 0.01 µm-500 µm.

39. An ultra-filtration device, **characterized by** comprising:
An ultra-filtration membrane formed from the polymer material of anyone of Claims 1-12,
or, an ultra-filtration element, comprising a substrate which at least has a local surface covered with a coating formed from the polymer material of anyone of Claims 1-12,
wherein an ultra-filtration channel is formed in the ultra-filtration membrane or the ultra-filtration element, and at least has a local inner wall formed from the polymer material; and preferably, the ultra-filtration channel has a pore size of 0.002 µm-0.1 µm.

40. A nano-filtration device, **characterized by** comprising:
a nano-filtration membrane formed from the polymer material of anyone of Claims 1-12,
or, a nano-filtration element, comprising a substrate which at least has a local surface covered with a coating formed from the polymer material of anyone of Claims 1-12,
wherein a nano-filtration channel is formed in the nano-filtration membrane or the nano-filtration element, and at least has a local inner wall formed from the polymer material; and preferably, the nano-filtration channel has a pore size of more than 0 and less than 0.002 µm.
